Europäisches Patentamt

European Patent Office

Office européen des brevets

(19)

(11) Veröffentlichungsnummer: **0 210 567 B1**

(12) **EUROPÄISCHE PATENTSCHRIFT**

(45) Veröffentlichungstag der Patentschrift: 24.04.91

(51) Int. Cl.⁵: **B01D 19/04**

(21) Anmeldenummer: 86109967.9

(22) Anmeldetag: 21.07.86

(54) **Verfahren zur Schaumdämpfung.**

(30) Priorität: 29.07.85 DE 3527089

(43) Veröffentlichungstag der Anmeldung:
04.02.87 Patentblatt 87/06

(45) Bekanntmachung des Hinweises auf die
Patenterteilung:
24.04.91 Patentblatt 91/17

(84) Benannte Vertragsstaaten:
AT BE CH DE FR GB IT LI NL

(56) Entgegenhaltungen:
DE-A- 1 419 683
FR-A- 2 236 517
US-A- 3 127 235
US-A- 3 404 095

(73) Patentinhaber: Henkel Kommanditgesellschaft
auf Aktien
Postfach 1100 Henkelstrasse 67
W-4000 Düsseldorf-Holthausen(DE)

(72) Erfinder: Kresse, Franz
Am Bruchhauser Kamp 12
W-4010 Hilden(DE)
Erfinder: Osberghaus, Rainer, Dr.
Südalle 47
W-4000 Düsseldorf(DE)
Erfinder: Scheller, Bernfrid
Beethovenstrasse 110
W-5024 Pulheim(DE)

## Beschreibung

Flüssigkeiten, vor allem wäßrige Lösungen, die oberflächenaktive Substanzen enthalten, neigen zur Schaumbildung, wenn sie im Kontakt mit einem Gas bewegt werden. Da der Schaum die Handhabung der Flüssigkeit stören kann, ist die Schaumbildung in vielen Fällen unerwünscht und man hat sich aus diesem Grunde bereits seit langem bemüht, Verfahren zu entwickeln, mit deren Hilfe die Schaumbildung gemindert werden kann. Dabei hat insbesondere der Zusatz von schaumdämpfenden Mitteln (Schauminhibitoren, Entschäumern) zu den gefährdeten Flüssigkeiten weite Verbreitung gefunden.

Bei den schaumdämpfend wirkenden Verbindungen handelt es sich um hydrophobe, nahezu wasserunlösliche Flüssigkeiten, die als solche oder in Form von Lösungen oder Emulsionen oder adsorbiert an pulverförmige Festoffe, insbesondere $SiO_2$, eingesetzt werden. Einen Überblick über die bisherigen Entwicklungen geben H.-F. Fink und G. Koerner in Ullmanns Encyklopädie der technischen Chemie, 4. Auflage, Weinheim (1981), Band 20, Seiten 411 - 414.

Da Entschäumer bereits in sehr geringer Menge wirksam sind, führt die Dosierung der Zusätze oft zu Schwierigkeiten, insbesondere dann, wenn die zu entschäumenden Flüssigkeiten bereits mit großen Schaummengen vermischt sind oder eine gleichmäßige Verteilung des Entschäumers aus anderen Gründen erschwert ist. Oft können diese Schwierigkeiten durch höhere Dosierung überwunden werden, doch ist dieses Verfahren wenig ökonomisch. In der US-Patentschrift US-A- 3 127 235 ist vorgeschlagen worden, alternativ zu einer direkten Dosierung des Entschäumerwirkstoffes diesen zunächst auf bestimmte polymere Träger aufzubringen. Die Aufnahmekapazität dieser Trägermaterialien ist jedoch gering, so daß auch diese Methode in der Praxis keine Anwendung gefunden hat.

Aufgabe der vorliegenden Erfindung ist es, eine Möglichkeit zur Umgehung der geschilderten Schwierigkeiten zu finden und eine neue, einfache Dosierungsform für schaumdämpfende Mittel bereitzustellen.

Gegenstand der Erfindung ist daher ein Verfahren zur Verminderung der Schaumbildung in bewegten Gas-Flüssigkeits-Gemischen, bei dem ein mit einem schaumdämpfenden Mittel oberflächlich beladener stückförmiger Träger, der ganz oder zu wesentlichen Teilen aus hydrophobem Kunststoff besteht, mit der Flüssigkeit oder dem Gas-Flüssigkeits-Gemisch in Kontakf gebracht wird, das dadurch gekennzeichnet ist, daß der Träger ganz oder zu mehr als 30 Gew.-% aus einem polymerisierten Olefinkohlenwassersoff besteht und mit 5 bis 500 % seines Gewichts an schaumdämpfendem Mittel beladen ist.

Ein weiterer Gegenstand der Erfindung ist der bei diesem Verfahren eingesetzte Träger in der mit schaumdämpfendem Mittel oberflächlich beladenen stückigen Form.

Mit der Bezeichnung als "stückförmig" soll dabei eine Unterscheidung von den Schauminhibitoren in Pulver- oder Granulatform vorgenommen werden, ohne daß damit eine bestimmte geometrische Form vorgegeben wird. Wesentlich ist, daß bei dem Verfahren stets nur einzelne oder wenige Stücke zur Schaumminderung verwendet werden.

Das erfindungsgemäße Verfahren kann überall dort erfolgreich eingesetzt werden, wo zum Schäumen neigende Flüssigkeiten oder bereits vorgebildete Gas-Flüssigkeits-Gemische bewegt werden. Der beladene Träger gibt dabei an das vorbeiströmende Medium langsam kleine Mengen des schaumdämpfenden Mittels ab und mindert dadurch die Schaumbildung bis hin zur vollständigen Zerstörung des bereits vorhandenen Schaums. Die Anwendung in Stückform macht es möglich, nach der erwünschten Minderung des Schaumes in einer begrenzten Flüssigkeitsmenge den nicht benötigten überschüssigen Entschäumer wieder zu entnehmen und damit die Überdosierung, die bei flüssigen oder pulverförmigen Entschäumerzubereitungen wegen der irreversiblen Zugabe leicht auftritt, zu vermeiden. Dabei kann der Träger frei in der Flüssigkeit schwimmen oder aber, was für die Entnahme nach ausreichender Entschäumung besonders zweckmäßig ist, ortsfest angebracht sein.

Besonders vorteilhaft läßt sich das Verfahren dort anwenden, wo ständig neue Flüssigkeitsmengen mit Schauminhibitor versehen werden müssen. Beim Einsatz eines ortsfesten Trägers ist die abgelöste Inhibitormenge abhängig von der Menge des vorbeiströmenden Mediums, so daß es möglich ist, selbst bei stark wechselndem Aufkommen stets eine etwa gleichbleibende Konzentration an Schauminhibitor in der Flüssigkeit aufzubauen. Das Verfahren stellt damit, trotz seiner Einfachheit, ein sehr wirksames selbstregulierendes Dosierungsprinzip für Schauminhibitoren dar.

Das Verfahren läßt sich in nahezu allen Gebieten, in denen bisher durch Zugabe von flüssigen oder pulverförmigen Inhibitorformulierungen entschäumt wurde, mit Vorteil einsetzen. Beispiele sind die Entschäumung von Lösungen bei der Papierherstellung, der Lackfabrikation, der Erdölgewinnung, der Flotation, der Zuckerraffination, die Schaumdämpfung bei chemischen Prozessen. wie der Emulsionspolymerisation, oder bei Destillationsprozessen und die Entschäumung von Abwässern aller Art. Besondere Vorteile bietet das Verfahren vor allem dort, wo zum Schäumen neigende Flüssigkeiten in Gegenwart von Gas gefördert, d.h. durch Rohrleitungen gepumpt oder gesaugt werden sollen. Oft ist es möglich, erheblich teurere Dosierungssysteme vollwertig zu ersetzen; in anderen Fällen wird durch das Verfahren eine kontinuierliche Dosierung erst ökonomisch sinnvoll.

Grundlage für das erfindungsgemäße Verfahren ist die Beobachtung, daß sich die üblichen schaumdämpfenden Mittel an hydrophobe Träger so dauerhaft anlagern könne, daß sie im Kontakt mit den zu entschäumenden, meist wäßrigen Flüssigkeiten nur langsam wieder abgetragen werden. Dies gilt selbst dann, wenn bis zu 500 Gew.-% an schaumdämpfendem Mittel. bezogen auf das Gewicht des Trägers allein, angelagert wurden. Die Beobachtung ist um so erstaunlicher, als es sich bei den schaumdämpfenden Mitteln in der Regel um Substanzen handelt, die bei Anwendungstemperatur flüssig sind.

Als Trägermaterialien eignen sich polymerisierte Olefinkohlenwasserstoffe, wie Polyethylen und insbesondere Polypropylen und Materialien, die mit diesen Kunststoffen durchsetzt oder überzogen sind, wie Polypropylen-Mischgewebe. Der Anteil der Polyolefine soll wenigstens 30 Gew.-%, insbesondere wenigstens 60 Gew.-% des Trägers ausmachen. Besonders bevorzugt werden Träger, die überwiegend, vorzugsweise aber vollständig aus Polypropylen bestehen.

Für die Aufnahme großer Mengen an schaumdämpfenden Mitteln ist es zweckmäßig, das Trägermaterial in einer Form einzusetzen, die eine hohe spezifische Oberfläche, vorzugsweise oberhalb von 0,01 m²/g und insbesondere oberhalb von 0,05 m²/g, aufweist. Vorzugsweise besitzt der Träger daher die Form eines Vlieses, eines Gewebes oder eines Gewirkes aus feinen Fasern. Dadurch wird gleichzeitig erreicht, daß er eine hohe Flexibilität und eine ausreichende Stabilität gegen mechanische Belastungen, wie sie in starken Strömungen auftreten können, aufweist.

Als schaumdämpfende Mittel können bei dem erfindungsgemäßen Verfahren nahezu alle üblichen Schauminhibitoren Verwendung finden, soweit sie sich in ausreichenden Mengen an den Träger anlagern lassen. Beispiele geeigneter Schauminhibitoren sind Wachse, Fettsäureester, Trialkylmelamine sowie insbesondere Paraffinöle und Silikonöle. Vorzugsweise werden Silikonöle verwendet. Je nach Trägermaterial lassen sich einzelne Schauminhibitoren in Mengen bis zu 500 Gew.-% und darüber, besogen auf das Gewicht des Trägers, ausreichend dauerhaft anlagern, doch können auch bei Auflagemengen von 0,5 Gew.-% und darunter noch brauchbare Entschäumungseffekte erzielt werden. Vorzugsweise werden 5 - 200 Gew.-% und insbesondere 5 - 100 Gew.-% an schaumdämpfendem Mittel auf den Träger aufgebracht.

Neben den entschäumend wirkenden Substanzen können auf den Träger zusätzlich Hilfsstoffe aufgebracht werden, die beispielsweise dazu dienen, die Handhabbarkeit oder die Lagerfähigkeit des beladenen Trägers zu verbessern oder die Abspülgeschwindigkeit zu regulieren. Sie werden üblicherweise in Mengen nicht über 200 Gew.-% des Trägers, insbesondere nicht über 100 Gew.-% des Trägers eingesetzt. Vorzugsweise wird aber ohne Hilfsstoffe gearbeitet.

Die Beladung des Trägers kann im einfachsten Falle durch Eintauchen in den flüssigen Entschäumer und anschließendes Abpressen und gegebenenfalls Abkühlen erfolgen. Anstelle des reinen Entschäumers kann auch eine Lösung in einem geeigneten flüchtigen Lösungsmittel verwendet werden, wenn anschließend zusätzlich getrocknet wird. Wegen der hohen Affinität der Schauminhibitoren zu den Trägermaterialien ist es aber auch möglich, die Schauminhibitoren aus wäßrigen Emulsionen auf die Träger aufziehen zu lassen. Diese Auftragsweise wird besonders bei solchen Schauminhibitoren bevorzugt, die bereits in Emulsionsform kommerziell angeboten werden. Die oben erwähnten Hilfsstoffe werden gegebenenfalls zusammen mit den Schauminhibitoren oder in getrennten Arbeitsgängen auf die Träger aufgebracht.

Die Anwendung des trägergebundenen Schauminhibitors erfolgt in der Weise, daß ein Stück oder einige Stücke des beladenen Trägers mit der zu entschäumenden Flüssigkeit oder dem Gas-Flüssigkeits-Gemisch vorübergehend oder dauernd in Kontakt gebracht werden. Die Stücke können dabei frei in der Flüssigkeit beweglich oder aber so befestigt sein, daß sie mit der Flüssigkeit oder dem Gas-Flüssigkeits-Gemisch in Berührung kommen können. Die Befestigung läßt sich beispielsweise dadurch erreichen, daß man den Träger an eine Leine bindet, ihn anklammert, an einen Haken hängt oder in einem käfigartigen ortsfesten Behälter unterbringt, der von dem zu entschäumenden Medium durchströmt werden kann.

Größe und Abmessung der Stücke des beladenen Trägers werden nach Bedarf gewählt. Maßgebend sind dabei u. a. die Menge des benötigten Schauminhibitors und die Zeit, die für die Entschäumung zur Verfügung steht. Da die Abspülgeschwindigkeit sowohl durch die Wahl des Schauminhibitors als auch durch die Bereitstellung einer ausreichend großen benetzbaren Oberfläche am beladenen Träger nahezu beliebig variiert werden kann, ist es möglich, die Entschäumerstücke allen Bedürfnissen der Praxis anzupassen. So wird man beispielsweise, um schnell eine kurzzeitige Wirkung zu erzielen, große, wenig beladene Entschäumerstücke mit großer Oberfläche verwenden, während man für die Abgabe von kleinen Entschäumermengen über längere Zeit stark beladene Träger mit kleiner Oberfläche bevorzugen wird.

3

Beispiele

### 1. Beladung von Polypropylengewebe mit Silikonentschäumer

Aus 10,5 g eines flüssigen Silikonentschäumers (VP 1132 der Firma Wacker Chemie GmbH), 40 g eines pulverförmigen Textilwaschmittels (als Emulgierhilfe) und 1 Liter Wasser wurde zunächst eine Emulsion bereitet. Dazu wurde das Waschmittel, das 4 Gew.-% Seife, 4 Gew.-% Alkylbenzolsulfonat und 4 Gew.-% Fettalkoholethoxylate als Tenside neben üblichen Buildersubstanzen enthielt, mit dem flüssigen Entschäumer vorgemischt und dann in da sauf 100 °C erwärmte Wasser eingerührt. In die entstandene Emulsion wurde ein Polypropylen-Gewebe (Wirk-Köper Nr. 601, 90 g/m², Firma Hero, Crailsheim) im Gewicht von 10, 5 g eingelegt und 10 Minuten darin bei 100 °C bewegt. Nach dieser Zeit wurde das Gewebe mit einem Spatel entnommen, 2 Minuten unter fließendem Leitungswasser gespült und dann 24 Stunden an der Luft bei etwa 30 °C getrocknet. Laut gravimetrischer Analyse war der Entschäumer vollständig auf das Gewebe aufgezogen, entsprechend einem Beladungsgrad von 100 %, bezogen auf Trägergewicht.

### 2. Entschäumung eines Waschbades

4 kg Reinigungstücher (Mops), wie sie bei der gewerblichen Fußbodenreinigung verwendet werden, wurden in verschmutzter Form in einer Haushaltswaschmaschine vom Typ Miele De Luxe W 433 unter Verwendung von 160 g eines Waschmittels für gewerbliche Wäschereien bei 95 °C gewaschen. Das Waschmittel hatte folgende Zusammensetzung:

36 Gew.-% Pentanatriumtriphosphat
15 Gew.-% Soda
25 Gew.-% Natriummetasilikat
6,5 Gew.-% Alkylbenzolsulfonat
3,2 Gew.-% Fettalkoholethoxylat
4,5 Gew.-.% Seife
Rest $Na_2SO_4$ und Wasser

Bedingt durch die großen Mengen an Reinigungsmitteln, die mit den Mops in die Flotte eingeschleppt wurden, schäumte die Waschmaschine regelmäßig über. Eien geringere Dosierung des Waschmittels führte zur Vergrauung der Mops und zur Inkrustierung der Gewebe.

Die Schaumprobleme konnten trotz hoher Dosierung des Waschmittels mühelos beherrscht werden, wenn 10 g eines mit einer Schaumbremse beladenen Trägers gemäß Beispiel 1 zusammen mit den Mops in die Flotte gegeben wurden. Der nach den Wasch- und Spülgängen wieder entnommene Träger enthielt noch so viel Schauminhibitor, daß er 18 mal für den selben Zweck wiederverwendet werden konnte.

### 3. Entschäumung eines strömenden Flüssigkeits-Gas-Gemisches

Ein Fußboden, der mit Teppichware aus Polyamid belegt war, wurde mit Hilfe eines Sprühextraktionsgerätes vom Typ SE 30 der Firma floordress, Waldhausen, wie es in der gewerblichen Gebäudereinigung üblich ist, zunächst mit einer Shampoolösung eingesprüht und im selben Arbeitsgang durch Absaugen wieder davon befreit. Das Volumen des Sammelbehälters betrug 17 Liter, konnte aber wegen der Schaumentwicklung nie voll genutzt werden. Um die störende Schaumentwicklung zu dämpfen, wurden in einer Versuchsreihe jeweils 20 ml eines Entschäumerkonzentrates (Gehalt: 1,6 g Silikonentschäumer) in den Sammelbehälter gegeben. In einer zweiten Versuchsreihe wurde ein mit demselben Silikonentschäumer (VP 1132) beladenes Polypropylenvlies mit Hilfe einer Klammer im Saugschlauch so befestigt, daß es dem Absaugstrom ausgesetzt war. Es bestand aus 16,1 g Vliesstoff (5,5 × 150 cm), der mit 27,9 g des Entschäumers beladen war (Bedadung erfolgte analog Beispiel 1). Tabelle 1 gibt die Ergebnisse der Versuche in Form des Flüssigkeitsvolumens wieder, das sich bis zum Auftreten von Störungen im Auffangbehälter gesammelt hatte.

EP 0 210 567 B1

## Tabelle 1

### Maximal erreichbare Flüssigkeitsmenge im Sammelbehälter (in Litern)

| Konzentration der Reiniger-lösung (Gew.% an Shampoo) | ohne Schaum-bremse | 20 ml Entschäumer-konzentrat | Träger-gebundener Entschäumer |
|---|---|---|---|
| 10 | 0,9 | 1,8 | 2,0 |
| 5 | 0,9 | 2,3... | 2,5 |
| 2,5 | 1,5 | 3,6 | 5,0 |
| 1,25 | 3,0 | 8,8 | 14,2 |

In dem Versuchen wurde das beladene Polypropylenvlies mehrmals nacheinander verwendet. Nach 25 Füllungen des Sammelbehälters hatte es durchschnittlich 6 g des Schauminhibitors abgegeben, während bei Verwendung des flüssigen Inhibitorkonzentrates nach 25 Durchgängen 40 g des reinen Inhibitors verbraucht worden waren.

Aus dieser Gegenüberstellung wird deutlich, daß das neue Verfahren zu einer Verringerung des Entschäumerverbrauchs führt. Wie die Ergebnisse in Tabelle 1 zeigen, wird trotz wesentlich kleinerer Entschäumermenge die Schaumbildung stärker gedämpft als bei Verwendung des flüssigen Inhibitorkonzentrats.

Ähnlich gute Ergebnisse wurden erhalten, wenn den Silikonentschäumer Baysilon M 100, Baysilon E (Firma Bayer) oder Polymekon 1488 (Firma Th. Goldschmidt, Essen) auf Polypropylenträgern oder auf Polypropylenmischgewebe verwendet wurden.

## Ansprüche

1. Verfahren zur Verminderung der Schaumbildung in bewegten Gas-Flüssigkeits-Gemischen, bei dem ein mit einem schaumdämpfenden Mittel oberflächlich beladener stückförmiger Träger, der ganz oder zu wesentlichen Teilen aus hydrophobem Kunststoff besteht, mit der Flüssigkeit oder dem Gas-Flüssigkeits-Gemisch in Kontakt gebracht wird, dadurch gekennzeichnet, daß der Träger ganz oder zu mehr als 30 Gew.-% aus einem polymerisierten Olefinkohlenwasserstoff besteht und mit 5 bis 500 % seines Gewichts an schaumdämpfendem Mittel beladen ist.

2. Verfahren nach Anspruch 1, bei dem der beladene Träger ortsfest angebracht ist und von der Flüssigkeit oder dem Gas-Flüssigkeits-Gemisch umströmt wird.

3. Verfahren nach einem der Ansprüche 1 oder 2, bei dem der Träger zu mehr als 30 Gew.-% aus Polypropylen besteht.

4. Verfahren nach einem der Ansprüche 1 bis 3, bei dem der Träger in Form eines Vlieses, eines Gewirkes oder eines Gewebes vorliegt.

5. Verfahren nach einem der Ansprüche 1 bis 4, bei dem der Träger mit 5 bis 200 % seines Gewichts an schaumdämpfendem Mittel beladen ist.

5

6. Verfahren nach einem der Ansprüche 1 bis 5, bei dem das schaumdämpfende Mittel aus der Gruppe der Paraffine, Silikone und deren Mischungen ausgewählt ist.

7. Verfahren nach einem der Ansprüche 1 bis 6, bei dem der Träger vollständig aus Polypropylen besteht und mit einem Silikonöl beladen ist.

8. Stückförmiger Träger aus hydrophobem Kunststoff, der mit einem schaumdämpfenden Mittel oberflächlich beladen ist, dadurch gekennzeichnet, daß er ganz oder zu mehr als 30 Gew.-% aus einem polymerisierten Olefinkohlenwasserstoff besteht, eine spezifische Oberfläche oberhalb von 0,01 m²/g aufweist und mit 5 bis 200 Gew.-% eines schaumdämpfenden Mittels aus der Gruppe Paraffine, Wachse, Fettsäureester, Trialkylmelamine, Silikone und deren Mischungen oberflächlich beladen ist.

9. Stückförmiger Träger nach Anspruch 8 in Form eines Vlieses, Gewebes oder Gewirkes, der mit 5 bis 200, vorzugsweise 5 bis 100 Prozent seines Gewichts an schaumdämpfendem Mittel beladen ist.

10. Stückförmiger Träger nach Anspruch 9, der mit einem schaumdämpfendem Mittel aus der Gruppe Silikonöle, Paraffinöle und deren Mischungen beladen ist.

11. Stückförmiger Träger nach Anspruch 10, der vollständig aus Polypropylen besteht und mit Silikonöl beladen ist.


## Claims

1. A process for reducing foaming in moved gas-liquid mixtures, in which a piece-form carrier consisting entirely or essentially of hydrophobic plastic charged at its surface with a foam-inhibiting agent is brought into contact with the liquid or with the gas-liquid mixture, characterized in that all or more than 30% by weight of the carrier consists of a polymerized olefin hydrocarbon and is charged with 5 to 500% of its weight of foam-inhibiting agent.

2. A process as claimed in claim 1, in which the charged carrier is fixed in place and the liquid or the gas-liquid mixture flows over it.

3. A process as claimed in claim 1 or 2 in which more than 30% by weight of the carrier consists of polypropylene.

4. A process as claimed in any of claims 1 to 3 in which the carrier is in the form of a nonwoven or a woven or knitted cloth.

5. A process as claimed in any of claims 1 to 4 in which the carrier is charged with from 5 to 200% of its weight of foam inhibitor.

6. A process as claimed in any of claims 1 to 5 in which the foam inhibitor is selected from the group comprising paraffins, silicones and mixtures thereof.

7. A process as claimed in any of claims 1 to 6 in which the carrier consists entirely of polypropylene and is charged with a silicone oil.

8. A piece-form carrier of a hydrophobic plastic charged at its surface with a foam inhibitor, characterized in that all or more than 30% by weight of the carrier consists of a polymerized olefin hydrocarbon, in that the carrier has a specific surface above 0.01 m²/g and in that it is charged at its surface with from 5 to 200% by weight of a foam inhibitor from the group comprising paraffins, waxes, fatty acid esters, trialkyl melamines, silicone oils and mixtures thereof.

9. A piece-form carrier as claimed in claim 8 in the form of a nonwoven or a woven or knitted cloth which is charged with 5 to 200% and preferably with 5 to 100% of its weight of foam inhibitor.

10. A piece-form carrier as claimed in claim 9 which is charged with a foam inhibitor selected from the

EP 0 210 567 B1

group comprising silicones, paraffins and mixtures thereof.

11. A piece-form carrier as claimed in claim 10 which consists entirely of polypropylene and is charged with silicone oil.

## Revendications

1. Procédé pour réduire la formation de mousse dans les mélanges agités de gaz-liquide, dans lequel un support en forme de morceau chargé superficiellement d'agent inhibiteur vis-à-vis de la mousse, constitué entièrement ou essentiellement d'une matière synthétique hydrophobe est mis en contact avec le liquide ou le mélange gaz-liquide, caractérisé en ce que le support est constitué entièrement ou à plus de 30 % en poids par un hydrocarbure oléfinique polymérisé et que ce support est chargé avec 5 à 500 % de son propre poids d'un agent inhibiteur vis-à-vis de la mousse.

2. Procédé conforme à la revendication 1, dans lequel le support chargé est inséré à poste fixe et baigne dans le flux constitué par le liquide ou le mélange gaz-liquide.

3. Procédé conforme à l'une des revendications 1 ou 2, dans lequel le support est constitué à plus de 30 % en poids par du polypropylène.

4. Procédé conforme à l'une des revendications 1 à 3 dans lequel le support est présent sous la forme d'une toison, d'un tissu à maille ou d'un tissu.

5. Procédé conforme à l'une des revendications 1 à 4 dans lequel le support est chargé avec 5 à 200 % de son propre poids d'un agent anti-mousse.

6. Procédé conforme à l'une des revendications 1 à 5 dans lequel l'agent anti-mousse est choisi parmi les familles des paraffines, des silicones et de leurs mélanges.

7. Procédé conforme à l'une des revendications 1 à 6 dans lequel le support est constitué entièrement en polypropylène, et est chargé avec une huile de silicone.

8. Support en forme de morceau en matière synthétique hydrophobe, chargé superficiellement avec un agent anti-mousse, caractérisé en ce que, il est constitué entièrement ou à plus de 30 % en poids par un hydrocarbure oléfinique polymérisé, il présente une surface spécifique de plus de 0,01 m2/gramme, il est chargé superficiellement avec 5 à 200% en poids d'un agent anti-mousse de la famille des paraffines, des cires, des esters d'acide gras, des trialkyles mélamines, des silicones et de leurs mélanges.

9. Support en forme de morceau conforme à la revendication 8 sous forme d'une toison, d'un tissu ou d'un tissu à mailles, qui est chargé avec 5 à 200 %, de préférence avec 5 à 100 % de son propre poids d'agent anti-mousse.

10. Support en forme de morceau conforme à la revendication 9, qui est chargé avec un agent inhibiteur de mousse de la famille des huiles de silicone, des huiles de paraffine, et de leurs mélanges.

11. Support en forme de morceau conforme à la revendication 10, constitué entièrement par du polypropylène, et chargé avec de l'huile de silicone.

7